# EUROPÄISCHE PATENTSCHRIFT

(11) **EP 1 241 635 B1**
(45) Veröffentlichungstag und Bekanntmachung des Hinweises auf die Patenterteilung: **17.10.2007**
(21) Anmeldenummer: 02004851.8
(22) Anmeldetag: 04.03.2002
(51) Int. Cl.: G07C 11/00, G07C 9/00

(54) **System zur Lagerung und Ausgabe von Objekten**
System for storage and distribution of objects
Système pour stockage et distribution d'objets

(30) Priorität: 15.03.2001 DE 10113072
(43) Veröffentlichungstag der Anmeldung: 18.09.2002
(73) Patentinhaber: ASTRA Gesellschaft für Asset Management mbH & Co. KG, 30890 Barsinghausen (DE)
(72) Erfinder: Stobbe, Anatoli, D-30890 Barsinghausen (DE)
(74) Vertreter: Patentanwälte Thömen & Körner

(56) Entgegenhaltungen:
- EP-A- 0 833 283
- WO-A-00/16280
- WO-A-92/01273
- WO-A-95/04324
- FR-A- 2 662 285
- US-A- 4 812 985
- US-A- 5 936 527

## Beschreibung

Die Erfindung betrifft ein System zur Lagerung und Ausgabe von Objekten nach dem Oberbegriff des Anspruchs 1.

Ein gattungsgleiches System ist bereits aus der US 6,131,808 bekannt. Dort wird ein Aufbewahrungsbehälter in Form eines mit einer Schwenktür verschließbaren Schrankes beschrieben. Hinter der Tür befindet sich eine Matrix mit Steckplätzen für die Objekte. Die Objekte selbst sind als Plättchen mit Identifikationsschaltkreisen ausgebildet, die über Kontakte in der eingesteckten Position mit Anschlüssen für ein Lesegerät verbindbar sind. Die Plättchen besitzen Ausnehmungen für eine Rastvorrichtung der Steckplätze.

Ferner weist der Aufbewahrungsbehälter eine Anzeigevorrichtung für Anwesenheit, Position oder Abwesenheit der Objekte und ein Ausgabegerät zur Freigabe der Tür und Freigabe der Steckplätze zur Entnahme der Objekte auf.

Die Objekte können als Schlüsselanhänger zu unlösbaren Befestigung von Schlüsseln ausgebildet sein.

Das beschriebene System eignet sich nur zur Identifizierung von Objekten, wenn diese in einem der Steckplätze angeordnet sind.

Das Dokument WO95/04324 offenbart einen Aufbewahrungsbehälter für Objekte, bei dem die Objekte manuell in Form einer Matrix einsetzbar und herausnehmbar sind und dabei in Ihren Steckplätzen verriegelbar und freigebbar sind. Eine schwenkbar Tür mit einem mechanischen Schloss ist vorgesehen, um den Zugang zu den Steckplätzen und damit zu den Objekten nur berechtigten Personen zu gewähren. Bei diesem Dokument erfolgt eine Datenübertragung zwischen den Identifikationschips der Objekte und dem Erfassungsgerät durch Kontakte zwischen den Objekten und den Fassungen der Steckplätze.

Das Dokument WO00/16280 beschreibt ein System zur Identifizierung, Lokalisierung, Lagerung und Ausgabe von Objekten, die elektronisch gespeicherte Identinformationen tragen, mit wenigstens einem Aufbewahrungsbehälter, der ein Lesegerät für die Identinformationen umfasst. Das System enthält ein Anzeigegerät für Anwesenheit, Position oder Abwesenheit und ein Ausgabegerät für die unzugänglich aufbewahrten Objekte, wobei die elektronisch gespeicherten Identinformationen mittels eines im jeweiligen Objekt angeordneten Tag berührungslos vom Lesegerät lesbar sind.

Der Erfindung liegt die Aufgabe zugrunde, ein System zur Identifizierung, Lokalisierung, Lagerung und Ausgabe von Objekten zu schaffen, das flexibel einsetzbar und bei der Identifizierung der Objekte gegen Verschleiß und Verschmutzung unempfindlich ist.

Diese Aufgabe wird bei einem System nach dem Oberbegriff des Anspruchs 1 durch die im Kennzeichen angegebenen Merkmale gelöst.

Weiterbildungen und vorteilhafte Ausgestaltungen ergeben sich aus den Unteransprüchen.

Bei dem erfindungsgemäßen System erfolgt der Austausch der elektronisch gespeicherten Identinformationen zum Lesegerät mittels eines Transponders berührungslos. Dadurch ist eine einfachere Handhabung und flexiblere Einsatzmöglichkeit gegeben, denn eine Identifikation ist dadurch grundsätzlich unabhängig von Position und Abstand des Transponders zum Lesegerät möglich. Das berührungslose Auslesen von Informationen ist darüber hinaus auch bei Verschmutzung des Objekts möglich und unterliegt keinem mechanischen Verschleiß der Kontakte.

Bei dem erfindungsgemäßen System sind die Steckplätze in an sich bekannter Weise in Form einer Matrix aufgebaut. Ferner verfügt das Ausgabegerät des Aufbewahrungsbehälters über eine verschieb- und verriegelbare Schiebetür oder Jalousie, welche über eine Zugangsberechtigung entriegelbar ist.

Hierdurch ist eine bessere Sicherung der Objekte gegen unbefugten Zugriff möglich. Außerdem kann mittels der Schiebetür oder Jalousie ein selektiver, eingeschränkter Zugang zu den freigegebenen Objekten ermöglicht werden, so dass die Entnahme nicht freigegebener Objekte wesentlich erschwert wird. Zudem besteht die Möglichkeit, die Schiebetür oder Jalousie motorisch zu betätigen und damit automatisch zu öffnen und zu schließen.

Gemäß einer Weiterbildung kann die Anzeigevorrichtung eine den Steckplätzen der Objekte zugeordnete Anzeigematrix aus Signalllampen oder Leuchtdioden zur wahlweisen Darstellung fehlender oder gewünschter Objekte und/oder ein gesondertes Anzeigefeld für die Steckplätze des lokalen Aufbewahrungsbehälters und/oder zusätzlicher entfernter Aufbewahrungsbehälter aufweisen.

Durch die Anzeigematrix lassen sich die interessierenden Objekte besonders bei einer großen Anzahl Steckplätze schneller identifizieren, wodurch die Handhabung besonders bei stark frequentierten Aufbewahrungsbehältern übersichtlicher gestaltet und in der Handhabung vereinfacht wird.

Durch das zusätzliche Anzeigefeld ist auch für entfernte Aufbewahrungsbehälter ist eine zentrale Überwachung möglich.

Das Lesegerät kann eine Auswertevorrichtung umfassen, welche einen oder mehrere der Zustände und Eigenschaften der Objekte, wie Anwesenheit, Abwesenheit, Steckplatz-Nummer, Aufbewahrungsbehälter-Nummer, lokaler Einsatzbereich, Zugriffsberechtigung, Zeit und/oder Dauer der Zugriffsberechtigung, Zeit der Entnahme und Rückgabe, Dauer der Entnahme, Zuordnung zu Benutzer erfasst und ausgibt und/oder speichert.

Je nach Anwendungsgebiet bietet sich die Möglichkeit, Manipulationen zu vermeiden oder wenigstens zu erkennen und so ein Höchstmaß an Sicherheit trotz benutzerfreundlicher Handhabung zu schaffen.

Als Ergänzung kann das Lesegerät auch ein Schreibgerät umfassen und die Transponder einen berührungslos vom Schreibgerät beschreibbaren Speicher besitzen in den ein oder mehrere der Zustände, Berechtigungen und Eigenschaften einschreibbar sind.

Dies ermöglicht eine zusätzliche Protokollierung und bietet so eine Kontrollmöglichkeit zum Schutz gegen Manipulationen. Außerdem lassen sich die Transponder auch an weiteren Lesegeräten auswerten, ohne dass eine ständige Datenaktualisierung zwischen den Lesegeräten erfolgen muß.

Das Lesegerät kann eine gemeinsame Antenne für den Aufbewahrungsbehälter umfassen. Zur Unterscheidung der Transponder erfolgt die Datenerfassung mittels eines Antikollisionsverfahrens.

Auf diese Weise lassen sich eine Vielzahl von Objekten mit Transpondern innerhalb des Einzugsbereichs der Antenne im Aufbewahrungsbehälter überwachen.

Es ist auch möglich, dass das Lesegerät für jeden Steckplatz eine gesonderte Antenne umfaßt.

Bei dieser Ausführung ist die gezielte Überwachung der Steckplätze möglich.

Eine Weiterbildung sieht vor, dass derselbe Transponder auch zur mobilen Erfassung und/oder Identifizierung an weiteren mobilen und/oder stationären Zugangssystemen mittels Lesegeräten lesbar ist. Dadurch vereinfacht sich der Zugang zu dezentralen Zugangssystemen, indem nur ein einziger Transponder mit Identinformationen mitgeführt werden muss.

Außerdem ist eine Verfolgung der Objekte möglich. So kann beispielsweise eine unbefugte Entnahme von Objekten überwacht und signalisiert werden. Außerdem besteht die Möglichkeit, bei dezentralen Zugangssystemen sowohl einen am Objekt befestigten mechanischen Schlüssel als auch die elektronisch gespeicherten Identinformationen gemeinsam auszuwerten, um einen Missbrauch durch mechanische Kopien des Schlüssel auszuschließen.

Das Objekt kann als Dorn mit einer Bohrung am freien Ende ausgebildet sein und in der Bohrung ein Einsatz mit einem Transponder angeordnet sein. Dabei kann in einem nach außen vorstehenden nicht-metallischen Kopf eine Antennenspule angeordnet sein.

Bei dieser Ausgestaltung ist einerseits der Transponder mechanisch geschützt, zum anderen aber eine von metallischen Teilen weitgehend unbeeinflusste Übertragungsmöglichkeit des Transponders zum Lesegerät vorhanden. Außerdem eignet sich der Dorn zur Aufnahme in einen Steckplatz einer Matrix im Aufbewahrungsbehälter.

Der Dorn kann eine Verriegelungsnut aufweisen.

Dadurch ist es möglich, das Objekt in der Matrix eines Aufbewahrungsbehälters gegen unbefugte Entnahme zu sichern.

Weiterhin kann das Objekt als Anhänger für einen oder mehrere zu sichernde Gegenstände ausgebildet sein, der unlösbar mit wenigstens einem zugehörigen Gegenstand verbunden ist.

Dadurch lassen sich ein oder mehrere Gegenstände, die selbst keinen eingebauten Transponder besitzen, sowohl in einem gesicherten Aufbewahrungsbehälter aufbewahren und kontrolliert freigeben, als auch verfolgen, und zusätzlich können die Gegenstände auch an entfernten Orten auf Legitimation überprüft und dadurch gegen Missbrauch gesichert werden.

Gemäß einer Weiterbildung kann die unlösbare Verbindung des Objektes mit dem zu sichernden Gegenstand überwacht werden und bei Zerstörung eine Eigenschaft des Transponders geändert werden.

Dadurch wir eine Manipulation erkannt, bei der der Gegenstand gewaltsam vom Objekt mit dem Transponder entfernt und das Objekt zur Vertuschung der Manipulation allein in den Aufbewahrungsbehälter zurückgegeben wird.

Außerdem kann das Objekt als mobiler Behälter für einen oder mehrere zu sichernde Gegenstände ausgebildet sein, in dem die Gegenstände transportiert werden.

Bei dieser Variante ist eine gemeinsame Verfolgung der im mobilen Behälter befindlichen Gegenstände über den Transponder des mobilen Behälters möglich. Wenn der mobile Behälter selbst keine Abschirmung darstellt und die in ihm befindlichen Gegenstände ihrerseits mit Transpondern versehene Objekte sind, kann auch eine individuelle Identifikation der Objekte innerhalb des mobilen Behälters vorgenommen werden.

Mittels mehrerer miteinander vernetzter Lesegeräte in lokalen Bereiche, die die Objekte nach Entnahme aus einem Aufbewahrungsbehälter aufsuchen oder verlassen, kann eine Lokalisierung auch außerhalb des Aufbewahrungsbehälters vorgenommen werden.

Hierdurch ist auch eine Überwachung und gegebenenfalls eine Ortung in einem größeren lokalen Bereich möglich, z. B. in einem Gebäude aus dem die Gegenstände nicht entfernt werden dürfen oder bei Entfernung eine Alarm auslösen sollen.

Ergänzend können die Transponder aktive Transponder mit eigener Energieversorgung sein. Der lokale Bereich für eine Überwachung kann so wesentlich vergrößert werden.

Vorteilhaft wird bei aktiven Transpondern zur Unterscheidung der Transponder die Datenerfassung mittels eines Antikollisionsverfahrens durchgeführt. Da aktive Transponder eine größere Reichweite als passive haben, ist die Gefahr von Kollisionen bei der Datenübertragung auch bei einer geringen lokalen Dichte der Transponder groß. Diese Gefahr kann durch ein Antikollisionsverfahren beseitigt werden.

Die zu verfolgenden Objekte können mittels Transpondern in lokalen Zonen überwacht werden, indem der gesamte Raum global oder die Zugänge mit Schranken erfasst werden und bei unberechtigtem Verlassen Alarm ausgelöst wird.

Nachfolgend wird die Erfindung anhand von Ausführungsbeispielen näher erläutert.

In der Zeichnung zeigen:
- Fig. 1: eine Ansicht eines Aufbewahrungsbehälters ohne Tür,
- Fig. 2: einen Querschnitt durch einen Aufbewahrungsbehälter mit einer Jalousie,
- Fig. 3: eine Darstellung eines in einem Steckplatz eines Aufbewahrungsbehälters angeordneten Objekts in Form eines Dorns und
- Fig. 4: eine Blockdarstellung eines Aufbewahrungs- und Verfolgungssystems von Objekten.

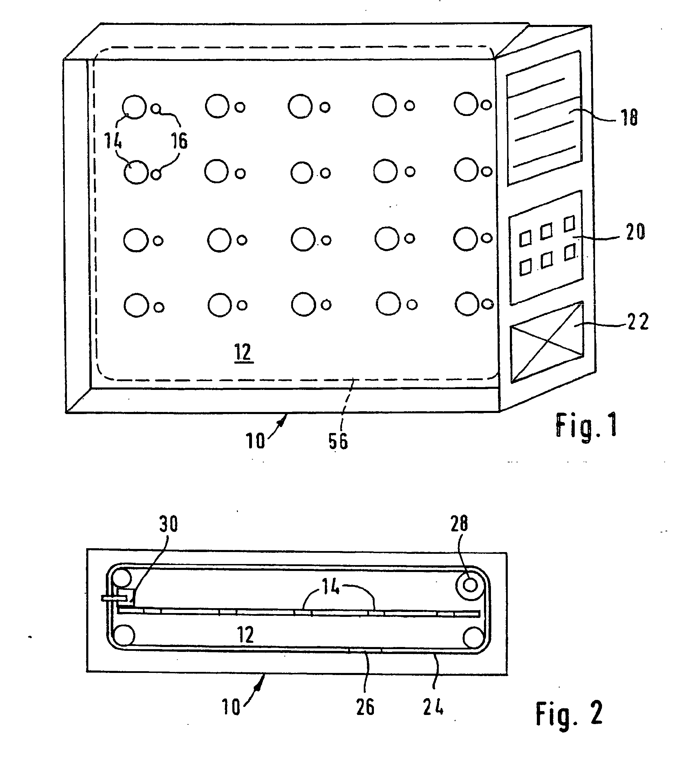

Bei der Darstellung nach Fig. 1 sind in einem Aufbewahrungsbehälter 10 in Form eines Schrankes in einer Matrix 12 Steckplätze 14 für Objekte 32 angeordnet. Die Steckplätze 14 sind zylindrisch geformt und umfassen jeweils eine dem Steckplatz zugeordnete optische Anzeige durch Signallleuchten oder Leuchtdioden, die analog zur Matrix der Steckplätze eine Anzeigematrix 16 bilden. Außen sind am Behälter ein Anzeigefeld 18 sowie eine Tastatur 20 angeordnet, mittels der objektbezogene Daten, wie fehlende Objekte, Zeiten der Entnahme und Rückgabe sowie Positionen gesuchter Objekte angezeigt werden können. Bei Vorhandensein mehrerer entfernter Aufbewahrungsbehälter können auch dort die Daten fernabgefragt werden. Außerdem können mittels der Tastatur 20 die benötigten Objekte freigegeben und dann manuell entnommen werden.

Zusätzlich befindet sich neben der Eingabetastatur 20 auch eine Antenne 22 eines Lesegerätes, mit dem sich ein Benutzer über einen Ausweis mit Identinformationen ausweisen kann. Darüber hinaus besteht die Möglichkeit, ein rückzugebendes Objekt 32 anzumelden, einen entsprechenden Steckplatz 14 zuzuweisen und zu prüfen, ob das eingesetzte Objekt auch auf dem schließlich manuell gewählten Steckplatz gelagert werden darf.

Durch eine alle Steckplätze gemeinsam erfassende optionale Antenne 56 kann alternativ mittels des Lesegerätes unter Anwendung eines Antikollisionsverfahren eine gemeinsame Auswertung der Daten der Objekte mit Transpondern vorgenommen werden. Dies betrifft auch eine Verfolgung der Entnahme und/oder Rückgabe von Objekten.

Bei der Darstellung in Fig. 2 ist vor der Matrix 12 zur Aufnahme der Objekte 32 eine Jalousie 24 angeordnet, die mittels eines Antriebsaggregats 28 gesteuert bewegbar und mittels einer Riegelvorrichtung 30 verriegelbar ist. Die Jalousie 24 enthält einen Schlitz 26, der so positioniert wird, dass nur eine Spalte der Matrix 12 mit Objekten 32 freigebbar ist. Ergänzend ist es auch möglich, eine weitere Jalousie in einer weiteren Koordinatenrichtung anzuordnen, so dass durch Positionierung der Schlitze in der Jalousie nur jeweils der Steckplatz eines Objektes zugänglich ist.

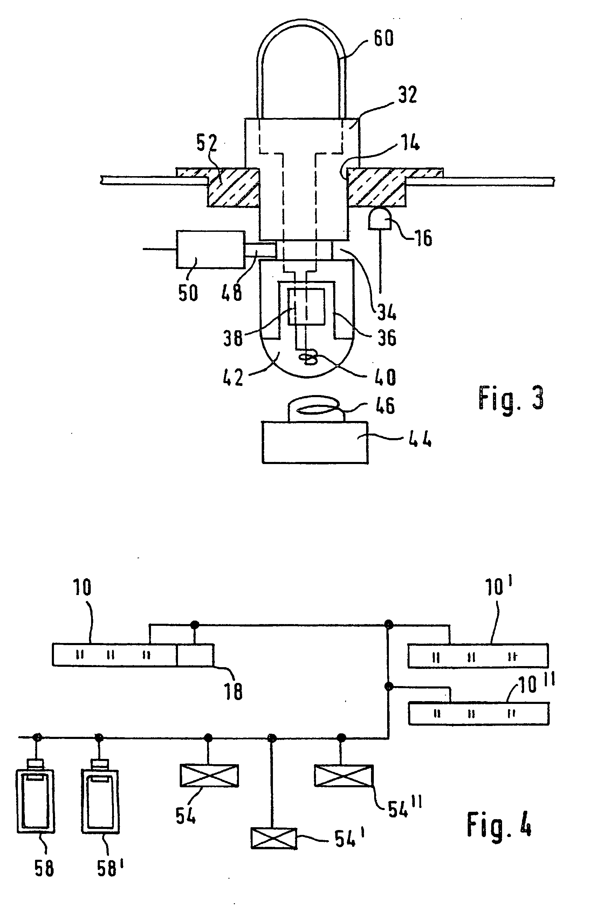

Bei der Darstellung nach Fig. 3 ist ein Objekt 32 in Form eines Dorns in einem Steckplatz 14 einer Matrix dargestellt. Der Dorn besitzt an seinem freien Ende eine Bohrung 36, in der ein Einsatz mit einem Transponder 38 angeordnet ist. Im vorstehenden nicht-metallischen Kopf 42 ist eine Antennenspule 40 angeordnet. Diese Antennenspule 40 kommt in der dargestellten Position in den Empfangsbereich einer stationären Lesespule 46 eines Lesegeräts 44 des Aufbewahrungsbehälters 10.

Der Dorn besitzt ferner eine umlaufende Verriegelungsnut 34, in die ein Riegel 48 des Aufbewahrungsbehälters 10 einrastet. Dieser kann elektromagnetisch 50 entriegelt werden. Ferner ist ein optischer Signalgeber in Form einer LED 16 dargestellt, der durch eine transparente Scheibe 52 nach außen sichtbar ist und einen bestimmten Zustand signalisiert.

Ein unlösbarer Verschluß 60 für einen zu befestigenden Gegenstand ist Bestandteil des Transpondersystems. Hier handelt es sich um eine Signalleitung, die von einer Überwachungsschaltung des Transponders auf Unversehrtheit geprüft wird, um eine gewaltsame Zerstörung des Verschlusses zu erfassen. Bei Beschädigung oder Zerstörung des Verschlusses kann dies vom Transponder gemeldet werden oder durch Abbruch der Transponderfunktion ermittelt werden.

Fig. 4 zeigt schließlich ein System mit mehreren Aufbewahrungsbehältern 10, 10', 10''und gesonderten Lesegeräten 54, 54', 54'', die über eine Datenleitung oder einen Datenbus untereinander verbunden sind. Hierdurch ist eine entfernte Identifizierung und lokale oder globale Verfolgung der Objekte möglich und ebenso eine Aufbewahrung in unterschiedlichen Aufbewahrungsbehältern. Dabei können die Aufbewahrungspositionen auch entfernter Aufbewahrungsbehälter dargestellt werden. Mittels weiterer vernetzter oder autarker Lesegeräte können auch weitere Steuer- und Freigabefunktionen mit denselben Transpondern kontrolliert werden.

Über Lesegeräte mit Rahmenantennen 58, 58' für größere Reichweiten und aktive Transponder können auch lokale Zone überwacht werden, indem der gesamte Raum global oder die Zugänge mit Schranken erfasst werden. In diesem Fall ist es möglich, Objekte danach zu verfolgen, ob sie sich innerhalb eines zugelassenen Bereichs befinden oder einen zugelassenen Bereich unerlaubt verlassen haben, was zur Auslösung eines Alarms ausgenutzt werden kann.

## Patentansprüche

1. System zur Identifizierung, Lokalisierung, Lagerung und Ausgabe von Objekten (32), insbesondere Schlüsseln, die elektronisch gespeicherte Identinformationen tragen, mit wenigstens einem Aufbewahrungsbehälter (10), der ein Lesegerät (44) für die Identinformationen umfasst, einem Anzeigegerät (16, 18) für Anwesenheit, Position oder Abwesenheit der Objekte (32) und einem Ausgabegerät (20) für die unzugänglich oder blockiert aufbewahrten Objekte (32), wobei der Aufbewahrungsbehälter (10) mittels des Ausgabegerätes automatisch verriegel- und freigebbare Steckplätze (14) für die Objekte (32) in Form einer Matrix (12) aufweist und wobei die Objekte (32) manuell einsetzbar und herausnehmbar sind, **dadurch gekennzeichnet, dass** die elektronisch gespeicherten Identinformationen mittels eines im jeweiligen Objekt angeordneten Transponders (38) berührungslos vom Lesegerät (44) lesbar sind und dass das Ausgabegerät eine motorisch zu betätigende und damit automatisch zu öffnende und zu schließende verschieb- und verriegelbare Schiebetür oder Jalousie (24) vor der Matrix (12) der Steckplätze (14) aufweist, wobei die Schiebetür oder Jalousie (24) über eine Zugangsberechtigung entriegelbar ist.

2. System nach Anspruch 1, **dadurch gekennzeichnet, dass** das Anzeigegerät eine den Steckplätzen (14) der Objekte (32) zugeordnete Anzeigematrix (16) aus Signalllampen oder Leuchtdioden zur wahlweisen Darstellung fehlender oder gewünschter Objekte und/oder ein gesondertes Anzeigefeld (18) für die Steckplätze des lokalen Aufbewahrungsbehälters (10) und/oder zusätzlicher entfernter Aufbewahrungsbehälter (10', 10'') aufweist.

3. System nach Anspruch 1 oder 2, **dadurch gekennzeichünet,** dass das Lesegerät (44) eine Auswertevorrichtung umfasst, welche einen oder mehrere der Zustände und Eigenschaften der Objekte (32), wie Anwesenheit, Abwesenheit, Steckplatz-Nummer, Aufbewahrungsbehälter-Nummer, lokaler Einsatzbereich, Zugriffsberechtigung, Zeit und/oder Dauer der Zugriffsberechtigung, Zeit der Entnahme und Rückgabe, Dauer der Entnahme, Zuordnung zu Benutzer erfasst und ausgibt und/oder speichert.

4. System nach Anspruch 3, **dadurch gekennzeichnet, dass** das Lesegerät auch ein Schreibgerät umfasst und die Transponder (38) einen berührungslos vom Schreibgerät beschreibbaren Speicher besitzen in den ein oder mehrere der Zustände, Berechtigungen und Eigenschaften einschreibbar sind.

5. System nach Anspruch 1 bis 4, **dadurch gekennzeichnet, dass** das Lesegerät eine gemeinsame Antenne für den Aufbewahrungsbehälter (10) umfasst und zur Unterscheidung der Transponder die Datenerfassung mittels eines Antikollisionsverfahrens erfolgt.

6. System nach Anspruch 1, **dadurch gekennzeichnet, dass** das Lesegerät für jeden Steckplatz eine gesonderte Antenne umfaßt.

7. System nach einem der Ansprüche 1 bis 6, **dadurch gekennzeichnet, dass** derselbe Transponder (38) auch zur mobilen Erfassung und/oder Identifizierung an weiteren mobilen und/oder stationären Zugangssystemen oder zur Steuerung weiterer Systeme mittels Lesegeräten (54, 54', 54'') lesbar oder mit weiteren Systemen kombinierbar ist.

8. System nach einem der Ansprüche 1 bis 7, **dadurch gekennzeichnet, dass** das Objekt (32) als Dorn mit einer Bohrung (36) am freien Ende ausgebildet ist und in der Bohrung (36) ein Einsatz mit einem Transponder (38) angeordnet ist, wobei in einem nach außen vorstehenden nichtmetallischen Kopf (42) eine Antennenspule (40) angeordnet ist.

9. System nach Anspruch 8, **dadurch gekennzeichnet, dass** der Dorn eine Verriegelungsnut (34) aufweist.

10. System nach einem der Ansprüche 1 bis 9, **dadurch gekennzeichnet, dass** das Objekt (32) als Anhänger für einen zu sichernden Gegenstand ausgebildet ist, der unlösbar mit wenigstens einem zugehörigen Gegenstand verbunden ist.

11. System nach Anspruch 10, **dadurch gekennzeichnet, dass** die unlösbare Verbindung des Objektes (32) mit dem zu sichernden Gegenstand überwacht wird und bei Zerstörung eine Eigenschaft des Transponders (38) geändert wird.

12. System nach einem der Ansprüche 1 bis 11, **dadurch gekennzeichnet, dass** das Objekt als mobiler Behälter für einen oder mehrere zu sichernde Gegenstände ausgebildet ist, in dem die Gegenstände transportiert werden.

13. System nach einem der Ansprüche 1 bis 12, **dadurch gekennzeichnet, dass** mittels mehrerer miteinander vernetzter Lesegeräte (54, 54', 54''...) lokale Bereiche, die die Objekte (32) nach Entnahme aus einem Aufbewahrungsbehälter (10) aufsuchen oder verlassen, eine Lokalisierung auch außerhalb des Aufbewahrungsbehälters (10) vorgenommen wird.

14. System nach Anspruch 13, **dadurch gekennzeichnet, dass** die Transponder (38) aktive Transponder mit eigener Energieversorgung sind.

15. System nach Anspruch 14, **dadurch gekennzeichnet, dass** zur Unterscheidung der Transponder die Datenerfassung mittels eines Antikollisionsverfahrens erfolgt.

16. System nach Anspruch einem der Ansprüche 1 bis 15, **dadurch gekennzeichnet, dass** Objekte mittels Transpondern in lokalen Zonen überwacht werden, indem der gesamte Raum global oder die Zugänge mit Schranken erfasst werden und bei unberechtigtem Verlassen Alarm ausgelöst wird.

## Claims

1. System for identifying, locating, storing and issuing objects (32), in particular keys, which carry electronically stored identity information, comprising at least one storage container (10) which comprises a reading device (44) for the identity information, a display device (16, 18) for the presence, position or absence of the objects (32) and an issuing device (20) for the objects (32) which are stored in an inaccessible or blocked manner, wherein the storage container (10) has insertion spaces (14) for the objects (32) in the form of a matrix (12), which insertion spaces can be locked and released automatically by means of the issuing device, and wherein the objects (32) can be manually inserted and removed, **characterised in that** the electronically stored identity information can be read in a contactless manner by the reading device (44) by means of a transponder (38) arranged in the respective object, and **in that** the issuing device comprises a sliding door or shutter (24) in front of the matrix (12) of insertion spaces (14), which sliding door or shutter is motor-driven and can thus be displaced and locked automatically for opening and closing purposes, wherein the sliding door or shutter (24) can be unlocked via an access authorisation.

2. System according to claim 1, **characterised in that** the display device comprises a display matrix (16) consisting of signalling lamps or light-emitting diodes assigned to the insertion spaces (14) of the objects (32) for selectively displaying missing or desired objects and/or a separate display panel (18) for the insertion spaces of the local storage container (10) and/or additional remote storage containers (10', 10").

3. System according to claim 1 or 2, **characterised in that** the reading device (44) comprises an evaluation device which detects and outputs and/or stores one or more of the states and properties of the objects (32), such as presence, absence, insertion space number, storage container number, local area of use, access authorisation, time and/or duration of the access authorisation, time of removal and return, duration of removal, allocation to users.

4. System according to claim 3, **characterised in that** the reading device also comprises a writing device and the transponders (38) have a memory which can be written to in a contactless manner by the writing device and to which one or more of the states, authorisations and properties can be written.

5. System according to claim 1 to 4, **characterised in that** the reading device comprises a common antenna for the storage container (10) and, in order to distinguish between the transponders, data acquisition takes place by means of an anti-collision method.

6. System according to claim 1, **characterised in that** the reading device comprises a separate antenna for each insertion space.

7. System according to one of claims 1 to 6, **characterised in that** the same transponder (38) can also be read by means of reading devices (54, 54', 54") for mobile acquisition and/or identification at further mobile and/or stationary access systems or for controlling further systems, or can be combined with further systems.

8. System according to one of claims 1 to 7, **characterised in that** the object (32) is designed as a pin with a bore (36) at the free end and an insert comprising a transponder (38) is arranged in the bore (36), wherein an antenna coil (40) is arranged in an outwardly protruding non-metallic head (42).

9. System according to claim 8, **characterised in that** the pin has a locking groove (34).

10. System according to one of claims 1 to 9, **characterised in that** the object (32) is designed as a tag for an article to be secured, which tag is connected in a non-detachable manner to at least one associated article.

11. System according to claim 10, **characterised in that** the non-detachable connection of the object (32) to the article to be secured is monitored, and a property of the transponder (38) is changed if the connection is destroyed.

12. System according to one of claims 1 to 11, **characterised in that** the object is designed as a mobile container for one or more articles to be secured, in which the articles are transported.

13. System according to one of claims 1 to 12, **characterised in that** location even outside the storage container (10) is performed by means of a plurality of networked reading devices (54, 54', 54") of local areas which the objects (32) seek out or leave after removal from a storage container (10).

14. System according to claim 13, **characterised in that** the transponders (38) are active transponders with their own power supply.

15. System according to claim 14, **characterised in that**, in order to distinguish between the transponders, data acquisition takes place by means of an anti-collision method.

16. System according to one of claims 1 to 15, **characterised in that** objects are monitored by means of transponders in local zones, wherein the entire area globally or the points of access are covered by barriers and an alarm is triggered in the event of unauthorised leaving.

## Revendications

1. Système d'identification, de localisation, de stockage et de remise d'objets (32), en particulier de clés portant des informations d'identification mémorisées électroniquement, avec au moins un réservoir de conservation (10) qui comprend un lecteur (44) pour lire les informations d'identification, avec un affichage (16, 18) de la présence, de la position ou de l'absence des objets (32) et avec un dispositif de remise (20) des objets (32), qui sont conservés de manière inaccessible ou bloquée, le réservoir de conservation (10) présentant des logements (14) pour les objets (32), logements qui sont en forme de matrice (12) et qui peuvent être verrouillés et libérés automatiquement au moyen du dispositif de remise, les objets (32) pouvant être insérés et enlevés manuellement, **caractérisé en ce que**, grâce à un transpondeur (38) disposé dans l'objet respectif, les informations d'identification mémorisées électroniquement peuvent être lues sans contact par le lecteur (44) et **en ce que** le dispositif de remise présente une porte coulissante ou une jalousie (24) déplaçable et verrouillable, pouvant être actionnée par moteur, qui se trouve devant la matrice (14), et qui peut, par conséquent, être ouverte et fermée automatiquement, la porte coulissante ou la jalousie (24) pouvant être déverrouillée par l'intermédiaire d'une autorisation d'accès.

2. Système suivant la revendication 1, **caractérisé en ce que** l'affichage présente une matrice de visualisation (16), qui est associée aux objets (32), qui est constituée de lampes témoin ou de diodes lumineuses pour représenter au choix des objets manquants ou souhaités et/ou un champs d'affichage séparé (18) pour les logements du réservoir de conservation local (10) et/ou de réservoirs de conservation supplémentaires enlevés (10', 10").

3. Système suivant la revendication 1 ou 2, **caractérisé en ce que** le lecteur (44) comprend un dispositif d'évaluation, qui saisit et sort et/ou mémorise un ou plusieurs des états et propriétés des objets (32), comme la présence, l'absence, le numéro de logement, le numéro du réservoir de conservation, le champs d'application local, l'heure d'enlèvement et de restitution, la durée d'enlèvement, l'affectation à l'utilisateur, etc.

4. Système suivant la revendication 3, **caractérisé en ce que** le lecteur comprend également un enregistreur et **en ce que** les transpondeurs (38) possèdent une mémoire pouvant être écrite sans contact par l'enregistreur et dans laquelle peuvent être inscrits un ou plusieurs des états, autorisations et propriétés.

5. Système suivant la revendication 1 à 4, **caractérisé en ce que** le lecteur comprend une antenne commune pour le réservoir de conservation (10) et **en ce que** la saisie des données a lieu au moyen d'un procédé anticollision pour différencier les transpondeurs.

6. Système suivant la revendication 1, **caractérisé en ce que** le lecteur comprend une antenne séparée pour chaque logement.

7. Système suivant une des revendications 1 à 6, **caractérisé en ce que** le même transpondeur (38) peut être lu au moyen de lecteurs (54, 54', 54") ou combiné à d'autres systèmes en vue d'une saisie et/ou d'une identification mobile sur d'autres systèmes d'accès mobiles et/ou stationnaires ou pour commander d'autres systèmes.

8. Système suivant une des revendications 1 à 7, **caractérisé en ce que** l'objet (32) est conçu comme mandrin avec une forure (36) à l'extrémité libre et **en ce qu'**un insert avec un transpondeur (38) est disposé dans la forure (36), une bobine d'antenne (40) étant disposée dans une tête (42) non métallique faisant saillie vers l'extérieur.

9. Système suivant la revendication 8, **caractérisé en ce que** le mandrin présente une rainure de verrouillage (34).

10. Système suivant une des revendications 1 à 9, **caractérisé en ce que** l'objet (32) est conçu comme pendentif pour un article à protéger, le pendentif étant relié de manière non détachable à au moins un article associé.

11. Système suivant la revendication 10, **caractérisé en ce que** la liaison non détachable entre l'objet (32) et l'article à protéger est surveillée et **en ce qu'**une propriété du transpondeur (38) est modifiée en cas de destruction.

12. Système suivant une des revendications 1 à 11, **caractérisé en ce que** l'objet est conçu comme réservoir mobile pour un ou plusieurs articles à protéger, réservoir, dans lequel ces articles sont transportés.

13. Système suivant une des revendications 1 à 12, **caractérisé en ce que** des zones locales, que les objets pénètrent ou quittent après avoir été enlevés d'un réservoir de conservation (10), sont localisées également à l'extérieur du réservoir de conservation (10) au moyen de plusieurs lecteurs (54, 54', 54"...) mis en réseau.

14. Système suivant la revendication 13, **caractérisé en ce que** les transpondeurs (38) sont des transpondeurs actifs ayant leur propre alimentation en énergie.

15. Système suivant la revendication 14, **caractérisé en ce que** la saisie des données a lieu au moyen d'un procédé anticollision, afin de différencier les transpondeurs.

16. Système suivant une des revendications 1 à 15, **caractérisé en ce que** les objets sont surveillés au moyen de transpondeurs dans des zones locales en couvrant globalement l'ensemble de l'espace ou en couvrant les accès via des barrières et **en ce qu'**une alarme est déclenchée en cas de sortie non autorisée.
